# EUROPÄISCHE PATENTSCHRIFT

(11) **EP 1 428 741 B1**
(45) Veröffentlichungstag und Bekanntmachung des Hinweises auf die Patenterteilung: **04.10.2006**
(21) Anmeldenummer: 03027591.1
(22) Anmeldetag: 02.12.2003
(51) Int. Cl.: B62D 13/00, B62D 13/02, B62D 13/06

(54) **Verfahren und Vorrichtung zur Ansteuerung des Verhaltens eines Anhängegerätes gegenüber einem Fahrzeug**
Method and apparatus for controlling the behaviour of a towed piece of equipment relative to a vehicle
Méthode et dispositif de commande du comportement d'une remorque agricole par rapport à un véhicule

(30) Priorität: 13.12.2002 DE 10258273
(43) Veröffentlichungstag der Anmeldung: 16.06.2004
(73) Patentinhaber: John Deere Fabriek Horst B.V., 5961 PT Horst (NL)
(72) Erfinder: Wilting, Jaap, 7021 GJ Zelhem (NL)
(74) Vertreter: Magin, Ludwig Bernhard

(56) Entgegenhaltungen:
- WO-A-02/45350
- DE-A- 10 011 734
- US-B1- 6 431 675

## Beschreibung

Die Erfindung betrifft ein Verfahren und eine Vorrichtung zur Ansteuerung eines Spurfolgesystems eines von einem landwirtschaftlichen Fahrzeug gezogenen Anhängegerätes, wobei das Anhängegerät eine Deichsel mit zwei hintereinander angeordneten Knicklagern umfasst, mit einer Steuereinheit, einer von der Steuereinheit angesteuerten Betätigungsvorrichtung, einer von der Betätigungsvorrichtung betätigten Stellvorrichtung und einem Fahrtrichtungssensor, welcher in Abhängigkeit eines eine Fahrtrichtung angebenden Elementes ein Fahrtrichtungssignal liefert.

Es ist bekannt, Anhängegeräte für landwirtschaftliche Maschinen oder Fahrzeuge mit Systemen zu bestücken, mit dem Ziel, das Handling und/oder den Arbeitsbetrieb mit diesen Anhängegeräten zu optimieren. Beispielsweise werden gezogene Spritzmaschinen oder Feldspritzen mit einem Spurfolgesystem versehen (Pulverisateurs Traines, Druckvermerk YY14723F, John Deere), um zu gewährleisten, dass ein spurgetreues Nachführen des Anhängegerätes, insbesondere beim Vorgewendebetrieb, erfolgt. Auf diese Weise wird erreicht, dass so wenig Feldfrüchte wie möglich beschädigt werden und der Zugkraftbedarf verringert wird. Dieses Spurfolgesystem wird während des Arbeitsbetriebs der Feldspritze manuell abgeschaltet, um Schlingerbewegungen oder steuerungsbedingte Ausgleichsbewegungen zu vermeiden, die zu Pendelbewegungen des Spritzgestänges führen könnten. Zusätzlich muss nach dem Abschalten des Spurfolgesystems auch die Neutralstellungsfunktion oft noch manuell betätigt werden, damit das Gerät gerade hinter dem Ackerschlepper läuft. Bei anderen Systemen werden mehrere Sensoren verwendet, und es gibt auch Spritzgeräte, bei denen die Räder anstatt der Deichsel verstellt werden.

Die DE 199 42 034 A1 offenbart ein derartiges Spurfolgesystem zur spurgetreuen Nachführung eines Anhängegerätes bzw. eine Lenkvorrichtung für landwirtschaftliche Anhänger. Das Anhängegerät wird mittels einer Knickdeichsel gelenkig an ein Zugmaul angehängt und das Deichselgelenk mittels einer Verstellvorrichtung winkelstellend beaufschlagt. Dabei wird die Verstellvorrichtung derart regelnd angesteuert, dass ein vorgegebenes Abrollverhalten der Anhängerachse gegenüber der Traktorachse eingehalten wird. Für die Straßenfahrt ist eine manuell zuschaltbare Sperre am Deichselgelenk vorgesehen, wobei ein Sperrensensor die Aktivierung erfasst und infolge dessen die Ansteuerung des Spurfolgesystems deaktiviert wird. Nachteilig wirkt sich hierbei aus, dass die Bedienperson für verschiedene Betriebszustände zusätzlichen Bedienungsaufwand betreiben muss.

In der DE 100 11 734 A1 wird ein Verfahren und eine Vorrichtung beschrieben, bei denen ein Spurfolgesystem automatisch dann abgeschaltet wird, wenn sich das Spritzgerät im Betriebszustand befindet. Hierbei erfasst ein Betriebssensor den Betriebszustand eines Hauptventils, in Abhängigkeit dessen die Stellvorrichtung aktiviert bzw. deaktiviert wird. Bei Betätigung des Spritzsystems durch die Bedienperson wird dadurch direkt eine Sperrfunktion des Spurfolgesystems hervorgerufen. Bei Deaktivierung des Hauptventils, insbesondere im Vorgewende, wird die Sperrfunktion aufgehoben und das Spurfolgesystem aktiviert. Insbesondere für den Einsatz am Vorgewende ist ein derartiges System von Vorteil. Nachteilig wirkt sich hierbei aus, dass bei aktivem Spurfolgesystem Rangierarbeiten erschwert werden, da die Manövrierfähigkeit des Gespanns eingeschränkt ist und insbesondere Rückwärtsfahrten mit aktivem Spurfolgesystem schwierig oder nahezu unmöglich sind. Zur Bearbeitung eines Eckbereiches eines Feldes ist die Bedienperson somit gezwungen, das Spurfolgesystem in diesem besonderen Fall während des Vorgewendebetriebes zu deaktivieren bzw. die Deichsel zum Anbaugerät starr zu stellen, so dass auch in diesem Fall die Bedienperson für verschiedene Betriebszustände zusätzlichen Bedienungsaufwand betreiben muss.

Das der Erfindung zugrunde liegende Problem wird in der Vielzahl der vorzunehmenden Bedienungsschritte während des Betriebs gesehen.

Dieses Problem wird erfindungsgemäß durch die Lehre der Patentansprüche 1 bzw. 7 gelöst, wobei in den weiteren Patentansprüchen Merkmale aufgeführt sind, die die Lösung in vorteilhafter Weise weiterentwickeln.

Erfindungsgemäß wird ein Verfahren und eine Vorrichtung zur Ansteuerung des Verhaltens eines Anhängegerätes gegenüber einem Fahrzeug der eingangs genannten Art vorgestellt, wobei das Verfahren vorsieht, dass die Steuereinheit die Betätigungsvorrichtung in Abhängigkeit des Fahrtrichtungssignals derart ansteuert, dass bei Rückwärtsfahrt eine Arretierung der Stellvorrichtung erfolgt. Auf diese Weise wird die Bedienperson entlastet und die während des Vorgewendebetriebes durchzuführenden Arbeitsschritte zur Deaktivierung des Spurfolgesystems bei Rangier- bzw. Manövrierarbeiten während der Bearbeitung der Feldeckbereiche der Bedienperson abgenommen.

Eine automatische Erfassung oder Vorgabe der Fahrgeschwindigkeit bzw. eine Signalgenerierung kann durch elektronische Kopplung mit einem Schalthebel zum Einlegen eines Rückfahrganges realisiert werden, wodurch eine automatische Deaktivierung des Spurfolgesystems beim Rückwärtsfahren erfolgt, so dass auch ein Versäumnis dessen aufgrund Unaufmerksamkeit oder Überbelastung der Bedienperson präventiv ausgeschlossen wird. Die Fahrtrichtungssignale können aber auch durch Fahrtrichtungssensoren generiert werden, bzw. mit anderen fahrtrichtungsbezogenen Aktivierungselementen oder Schaltungen verbunden sein.

Die vorhandene Steuereinheit für das Gespann kann in einem Haltemodus und in einem Regelmodus betrieben werden. Im Haltemodus wird die von der Steuereinheit gelenkte bzw. geregelte Stellvorrichtung in eine vorgebbare Grundstellung gebracht und fixiert. Hingegen wird im Regelmodus die Stellung der Stellvorrichtung gesteuert bzw. geregelt. Im Haltemodus wird das Betätigungselement der Stellvorrichtung, vorzugsweise ein hydraulisches Mehrwegeventil, durch die Steuereinheit so lange regelnd angesteuert, bis die Deichsel und damit auch die Stellvorrichtung eine Grund- oder Normalstellung eingenommen hat, d.h. die Deichsel in eine ausgestreckte, gerade Position gebracht wurde. Bei erreichter Normalstellung wird das Betätigungselement in eine Neutralstellung gebracht und die Deichsel bzw. Stellvorrichtung in dieser Grund- bzw. Normalstellung gehalten bzw. dadurch in dieser Stellung arretiert oder starr gestellt. Ein Haltemodus ist notwendig, wenn beispielsweise während eines Arbeitsbetriebes einer Anhängefeldspritze die Deichsel arretiert bzw. starr gestellt werden muss, damit ein störungsfreies Betreiben der Spritzvorrichtung ohne regelungsbedingte Vibrationen und Schwingungsvorgänge durchgeführt werden kann. Im Regelmodus wird das Betätigungselement der Stellvorrichtung im Wesentlichen regelnd in Abhängigkeit von einem in der Steuereinheit implementierten Regler angesteuert. Dabei wird die Stellvorrichtung durch das Betätigungselement in eine vorgebbare Sollposition gebracht, wobei Abweichungen von dieser Sollposition durch die Betätigungsvorrichtung ausgeglichen werden, so dass sich bei einer Kurvenfahrt die Räder des Anhängegerätes auf einer im Wesentlichen gleichen Kreisbahn bzw. Spur zum Fahrzeug bewegen. Die Sollposition wird dabei vorzugsweise durch einen an der Deichsel positionierten Spursensor oder Knickwinkel- bzw. Lenkwinkelsensor vorgegeben.

Die Steuereinheit wird im Haltemodus betrieben, wenn das Fahrzeug bzw. das Gespann in einem Rangier- oder Vorgewendebetrieb betrieben wird und ein Rückwärtsfahrtsignal auftritt. Ein Rangier- bzw. Vorgewendebetrieb ist insbesondere dadurch gekennzeichnet, dass das Arbeitsgerät deaktiviert ist bzw. sich nicht in Betriebs- oder Arbeitsstellung befindet. Bei einem Spritzgerät bzw. einer gezogenen Feldspritze ist dieser Zustand beispielsweise durch ein geschlossenes Hauptversorgungsventil gegeben. Insbesondere wenn die Bedienperson innerhalb eines Vorgewendes die vom Arbeitsgerät nicht erfassten Bereiche des Feldes, beispielsweise die Eckbereiche eines Feldes, bearbeiten möchte, ist ein Rangierbetrieb notwendig. Das Gespann muss zur Bearbeitung dieser Bereiche bzw. zur Positionierung des Arbeitsgerätes oft in Rückwärtsfahrt in eine entsprechende Stellung gebracht werden. Dabei ist es sehr schwierig oder nahezu unmöglich, bei aktiviertem Spurfolgesystem rückwärts zu fahren bzw. das Gespann zu rangieren, da das Spurfolgesystem auf einen Kurvenradius reagieren und entgegen der gewünschten Fahrtrichtung arbeiten würde. Bei Auftreten eines Rückwärtsfahrtsignals sieht das erfindungsgemäße Verfahren vor, die Steuereinheit im Haltemodus zu betreiben, so dass eine starre Lenkachse bzw. Deichsel vorliegt. Das erfindungsgemäße Verfahren ermöglicht hierbei auch den Betrieb der Steuereinheit im Haltemodus bei Rückwärtsfahrten außerhalb des Vorgewendebetriebes, unabhängig davon, ob ein Arbeitsbetrieb vorliegt oder nicht.

Die Steuereinheit wird im Regelmodus betrieben, wenn das Fahrzeug bzw. das Gespann in einem Rangier- oder Vorgewendebetrieb betrieben wird und ein Vorwärtsfahrtsignal auftritt. Insbesondere wenn die Bedienperson innerhalb eines Vorgewendes Rangierarbeiten durchführt oder beispielsweise nach Bearbeiten der Eckbereiche des Feldes wieder in eine zu bearbeitende Spur auf dem Feld einbiegen möchte, ist ein aktiviertes Spurfolgesystem hilfreich. Bei Auftreten eines Vorwärtsfahrtsignals sieht das erfindungsgemäße Verfahren vor, die Steuereinheit im Regelmodus zu betreiben, so dass eine spurgetreue Nachführung des Arbeitsgerätes erfolgen kann.

Die Steuereinheit wird unabhängig von einem Fahrtrichtungssignal im Haltemodus betrieben, wenn das Fahrzeug bzw. das Gespann im Arbeitsbetrieb betrieben wird. Der Arbeitsbetrieb ist insbesondere dadurch gekennzeichnet, dass das Arbeitsgerät aktiviert ist bzw. sich in Betriebs- oder Arbeitsstellung befindet. Bei einem Spritzgerät bzw. einer gezogenen Feldspritze ist dieser Zustand beispielsweise durch ein geöffnetes Hauptventil gegeben. Der Haltemodus während der Betriebsstellung des Arbeitsgerätes ist von Vorteil, da die Betätigungsvorrichtung sich dann, nach Positionierung der Stellvorrichtung in eine Grund- bzw. Normalstellung, in einer Neutralstellung befindet und die Deichsel dadurch arretiert wird. Durch Regelungsvorgänge hervorgerufene Störungen wie beispielsweise Schlingerbewegungen oder Vibrationen am Arbeitsgerät können dadurch vermieden werden. Eventuell notwendige Rückwärtsfahrten mit aktiviertem Arbeitsgerät können hierdurch ebenfalls mit starrer Achse durchgeführt werden.

Das erfindungsgemäße Verfahren wird durch ein Auslösemittel oder durch ein elektronisches Vorgewende-Management-System bzw. Headland-Management-System (HMS) automatisch aktiviert. Dabei wird das Auslösemittel, beispielsweise ein Schalter oder Hebel, durch die Bedienperson betätigt. Eine alternative Variante wird durch ein vorhandenes Vorgewende-Management-System bzw. HMS gegeben. Hierbei ist das erfindungsgemäße Verfahren Bestandteil der automatisch durchgeführten Arbeitsschritte während eines Vorgewendebetriebes und auch während des gesamten Arbeitsbetriebes aktiv. Sobald ein Vorgewende signalisiert wird, wird die Steuereinheit der Betätigungsvorrichtung in Abhängigkeit von der Fahrtrichtung im Regel- oder Haltemodus betrieben. Wird das Ende des Vorgewendebetriebes und somit der Beginn des Arbeitsbetriebes signalisiert, wird das erfindungsgemäße Verfahren vorzugsweise im Haltemodus betrieben.

Erfindungsgemäß enthält die Vorrichtung zur Anwendung bzw. Durchführung des vorangehend beschriebenen Verfahrens insbesondere Mittel zur Angabe eines Arbeitsmodus (z. B. Arbeitsbetrieb, Rangier- bzw. Vorgewendebetrieb), beispielsweise einen Sensor, der ein Signal ausgibt, wenn sich das Arbeitsgerät im Betrieb befindet, einen Fahrtrichtungssignalgeber zur Signalisierung von Vorwärts- bzw. Rückwärtsfahrt, sowie Mittel, durch die die Steuereinheit die Betätigungsvorrichtung in Abhängigkeit eines Vorwärts- oder Rückwärtsfahrtsignals ansteuert. Diese Mittel sehen vor, dass ein Fahrtrichtungssignal, beispielsweise durch elektrische Leitungen, durch eine oder mehrere elektrische Schnittstellen, durch eine oder mehrere mechanische Verknüpfungen oder durch andere Signalübertragungselemente bzw. -einheiten wie z.B. durch Funkelemente an die Steuereinheit geleitet bzw. übertragen wird. Das Fahrtrichtungssignal wird dabei von der Steuerung übergeordnet berücksichtigt, so dass die Steuereinheit sowohl im Rangier- und Vorgewendebetrieb als auch im Arbeitsbetrieb darauf ansprechen und in Abhängigkeit dessen die verschiedenen Steuermodi ausführen kann.

Zur Angabe der Fahrtrichtung sind ein Fahrtrichtungssensor oder Mittel zur Angabe der Fahrtrichtung enthalten. Dabei kann ein Sensor mit einem beliebigen die Fahrrichtung angebenden Element, beispielsweise mit einem Fahrtrichtungshebel oder mit einem der Räder des Fahrzeugs oder mit einem Getriebeelement oder dergleichen verbunden sein und ein Signal abgeben, durch das auf die Fahrtrichtung des Fahrzeugs geschlossen werden kann. Das von dem Sensor gelieferte Signal wird dabei gegebenenfalls durch eine auf die Steuereinheit ausgerichtete Signalwandlung transformiert bzw. angepasst.

Zur Lieferung des Fahrtrichtungssignal an das Steuersystem ist ein CAN-Bus-System enthalten. Insbesondere bei neueren Fahrzeugen bzw. landwirtschaftlichen Maschinen ist ein derartiges System Stand der Technik und ermöglicht einen umfassenden Signaltransfer verschiedenster Signale vom Fahrzeug zum Anhängegerät und umgekehrt. Das CAN-Bus-System ist insbesondere dazu geeignet, ein Fahrtrichtungssignal zu liefern bzw. zu übertragen, da dieses System ohnehin als zentrales Signalübertragungsorgan und Signalschnittstelle zur Informations- und Datenverarbeitung in einem modernen Fahrzeug dient und Signale verschiedenster Fahrzeugkomponenten beinhalten kann. Näheres zu einem CAN-Bus-System kann den Produktbroschüren der John Deere 6020 Serie mit dem Druckvermerk YY14139D und -40D entnommen werden.

Das erfindungsgemäße Verfahren wird mittels eines Auslösemittels aktiviert bzw. deaktiviert oder es wird innerhalb eines zuschaltbaren elektronischen Vorgewende-Management-Systems implementiert. Vorgewende-Management-Systeme bzw. Headland-Management-Systeme (HMS) gehören ebenfalls bei modernen landwirtschaftlichen Schleppern zum Stand der Technik. Ein Headland-Management-System nimmt dem Betreiber des Fahrzeugs verschiedene durchzuführende Arbeitsschritte beim Durchfahren des Vorgewendes (Headland) ab. Die durchzuführenden Arbeitsschritte können dabei individuell vom Betreiber vorgegeben und einprogrammiert werden. Durch Aktivierung des HMS, beispielsweise über einen Aktivierungsschalter, kann dann die Prozedur zur Abarbeitung der Arbeitsschritte abgerufen werden. Die Vorrichtung zur Durchführung des erfindungsgemäßen Verfahrens sieht vor, dass ein Aktivierungsschalter bzw. Deaktivierungsschalter enthalten ist, durch das das erfindungsgemäße Verfahren innerhalb des HMS zu bzw. abschaltbar ist oder unabhängig von einem derartigen Aktivierungsschalter/Deaktivierungsschalter im HMS integriert werden kann. Näheres zu HMS kann ebenfalls den Produktbroschüren der John Deere 6020 Serie mit dem Druckvermerk YY14139D und -40D entnommen werden.

In einer bevorzugten Ausgestaltung der Erfindung wird die von der Betätigungsvorrichtung betätigte Stellvorrichtung elektronisch oder hydraulisch betrieben. Dementsprechend ist auch die Betätigungsvorrichtung elektronischer oder hydraulischer Bauart. Alternativ sind auch pneumatische Komponenten für die Stellvorrichtung bzw. zur Betätigung dieser möglich.

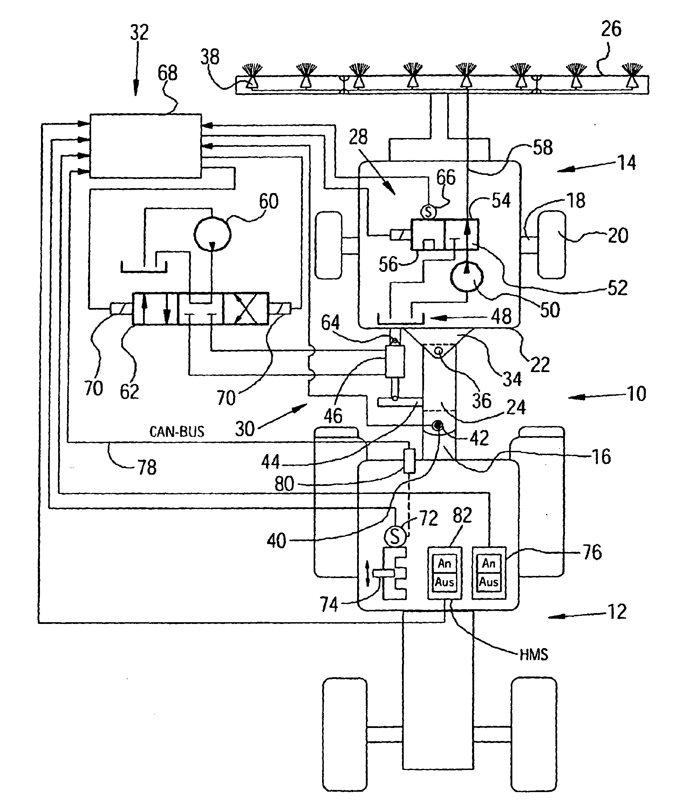

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Die einzige Figur zeigt ein Gespann 10 welches einen landwirtschaftlichen Schlepper 12 und ein von diesem gezogenes Anbaugerät, insbesondere eine Feldspritze 14 enthält.

Diese Kombination 10 ist dazu bestimmt, sich während eines Spritzbetriebs über ein Feld zu bewegen, wobei es bei der Fahrt über das Feld z. B. in Fahrgassen mit festgelegten Spuren oder in Fahrspuren durch den Bestand fährt und beim Wechsel zwischen den Fahrgassen über ein Vorgewende fährt.

Der Schlepper 12 bildet das Zugfahrzeug und weist eine Anhängekupplung 16 auf, die dem Anschluss des Spritzgeräts 14 dient.

Das Spritzgerät 14 ist fahrbar ausgebildet und enthält ein Fahrwerk 18 mit Rädern 20, ein Fahrgestell 22, eine Deichsel 24, ein Spritzgestänge 26, ein Spritzsystem 28, ein Spurfolgesystem 30 und eine Vorrichtung 32 zum Regeln oder Ansteuern des Spritzgerätes 14 und des Spurfolgesystems 30 entsprechend des erfindungsgemäßen Verfahrens.

Das Fahrwerk 18 enthält eine Achse, an die die Räder 20 montiert sind und die zu dem Schlepper 12 einen Abstand von mehreren Metern einhält, so dass bei einem nicht korrigierten Fahrbetrieb in der Kurve die Spur des Schleppers 12 von der Spur des Spritzgerätes 14 abweicht.

Das Fahrgestell 22 ist lediglich angedeutet und steht im Wesentlichen stellvertretend für den gesamten Aufbau einschließlich eines Tanks für Schädlingsbekämpfungsmittel. Im vorderen Bereich endet das Fahrgestell 22 in einer Gabel 34 mit einem gegebenenfalls als Büchse ausgebildeten Lager 36. Die Gabel 34 enthält zwei nicht näher bezeichnete horizontal verlaufende Platten, die einen Abstand zueinander aufweisen und zwischen sich die Deichsel 24 aufnehmen. Das Lager 36 ist um eine vertikale Achse angeordnet und verbindet die Deichsel 24 horizontal schwenkbar mit der Gabel 34. An der Rückseite des Fahrgestells 22 befindet sich ein mit mehreren Sprühdüsen 38 ausgestattetes Spritzgestänge 26.
Die Deichsel 24 stellt die Verbindung zwischen dem Fahrgestell 22, insbesondere der Gabel 36, und dem Schlepper 12, insbesondere dessen Anhängekupplung 16 dar. Die Verbindung mit der Anhängekupplung 16 erfolgt mittels eines Lagers 40, das einen Öffnungen in der Deichsel 24 und der Anhängekupplung 16 durchdringenden Bolzen enthält. Das Lager 36 ist mit einem Knickwinkelsensor 42 zum Erkennen des Knickwinkels zwischen dem Spritzgerät 14 und dem Schlepper 12 versehen, der zu dessen Lenkwinkel in einer eindeutigen Beziehung steht. In dem bevorzugten Ausführungsbeispiel ist der Knickwinkelsensor 42 als ein Potentiometer ausgeführt; allerdings können auch andere Ausführungsformen, wie etwa ein Stab verwendet werden, dessen Stellung von einem oder mehreren Lagesensoren erfasst wird und dessen Lage sich beim Lenken ändert. Die Deichsel 24 ist seitlich mit einem Arm 44 versehen, der in diesem Ausführungsbeispiel zugleich als Befestigungspunkt für eine Stellvorrichtung 46 dient.

Das Spritzsystem 28 enthält einen Tank 48, eine Pumpe 50, ein Hauptventil 52 und nicht näher bezeichnete Leitungen zwischen dem Tank 48, der Pumpe 50, dem Hauptventil 52 und den Sprühdüsen 38 am Spritzgestänge 26. Die Darstellung und Beschreibung des Spritzsystems 28 ist sehr vereinfacht. Tatsächlich sind weitere Ventile, Spülleitungen, Ansaug- und Mischbehälter und dergl. vorgesehen, auf die hier jedoch nicht eingegangen zu werden braucht. Das Spritzsystem 28 hat die Aufgabe, Spritzbrühe aus dem Tank 48 zu den Sprühdüsen 38 zu fördern, die es auf Pflanzen sprühen. Das Hauptventil 52 ist hier lediglich als ein Zweistellungsventil dargestellt, dessen eine Stellung 54 für Spritzbetrieb und dessen andere Stellung 56 für Nicht-Spritzbetrieb steht. Demnach wird in der Stellung 54 Spritzbrühe in eine Leitung 58 zur Versorgung der Sprühdüsen 38 gepumpt, während in der Stellung 56 die Spritzbrühe in den Tank 48 zurückgepumpt wird.

Das Spurfolgesystem 30 enthält eine Pumpe 60, eine Betätigungsvorrichtung 62 und die Stellvorrichtung 46. Die Pumpe 60 ist eine herkömmliche Hydraulikpumpe, die auch die Hydraulikpumpe des Schleppers sein kann, die Hydraulikflüssigkeit aus einem nicht näher bezeichneten Vorratsbehälter ansaugt und es über eine nicht bezeichnete Leitung zu der Betätigungsvorrichtung 62 pumpt. Die Betätigungsvorrichtung 62 ist als ein elektromagnetisch verstellbares Drei-Stellungs-Ventil mit drei Anschlüssen ausgebildet, von denen einer zu der Pumpe 60 und zwei zu der Stellvorrichtung 46 führen. Die Stellvorrichtung 46 ist als ein doppelt wirkender Hydraulikzylinder ausgebildet, der einerseits an dem Arm 44 und andererseits an einem Lager 64 an dem Fahrgestell 22 angreift. Das Spurfolgesystem 30 dient dazu, die Deichsel 24 gegenüber dem Fahrgestell 22 derart zu schwenken, dass das Spritzgerät 14 während einer Kurvenfahrt in der Spur des Schleppers 12 läuft. Hierzu wird die Stellvorrichtung 46 auf nachfolgend näher beschriebene Art und Weise mittels der Betätigungsvorrichtung 62 verstellt. '

Die Vorrichtung 32 zum Ansteuern und/oder Regeln des Spritzgeräts 14 bzw. des Spritzbetriebes enthält einen Arbeitsmodussensor 66 an dem Hauptventil 52, den Knickwinkelsensor 42 an der Anhängekupplung 16, eine Steuereinheit 68 und Magnete 70 an der Betätigungsvorrichtung 62. Des Weiteren sind ein Fahrtrichtungssensor 72 an einem Schalthebel 74 oder an einem anderen eine Fahrtrichtung angebenden Element enthalten, sowie ein Aktivierungsschalter 76. Alternativ ist hier ein CAN-Bus-System 78 vorgesehen. Das von dem Fahrtrichtungssensor 72 gelieferte Signal kann so an einer geeigneten CAN-Bus-Schnittstelle 80 abgegriffen und der Steuereinheit 68 zugeführt werden.

Die Aufgabe der Vorrichtung 32 besteht zum einen darin, den Betrieb des Spritzgeräts 14 so zu steuern oder zu regeln, dass abhängig von erfassten Signalen bestimmte Betriebszustände erreicht werden. Die Abhängigkeiten und einzustellenden Betriebszustände sind in der Steuereinheit 68 hinterlegt. Zum anderen dient die Vorrichtung 32 dazu, in Abhängigkeit von den vom Knickwinkelsensor 42, vom Arbeitsmodussensor 66 und vom Fahrtrichtungssensor 72 erfassten Signalen bestimmte Stellungen der Stellvorrichtung 46 anzusteuern zu regeln und zu halten bzw. zu arretieren. Die Abhängigkeiten der verschiedenen Steuermodi, wie Haltemodus und Regelmodus, sowie die entsprechenden Steuerimpulse für die Betätigungsvorrichtung 62 der Stellvorrichtung 46 sind ebenfalls in der Steuereinheit 68 hinterlegt.

Der Arbeitsmodussensor 66 ermittelt, ob sich das Hauptventil 52 in seiner Spritz- oder Nicht-Spritz-Stellung befindet, d. h. ob das Spritzgerät 14 in Betrieb ist oder nicht. Wenn die Ausbringung des Spritzmittels nicht nur von dem Hauptventil 52 aus, sondern auch mit anderen Ventilen gesteuert wird, z. B. von Teilbreitenventilen, ist auch deren Stellung zu ermitteln, so dass dann, wenn alle Teilbreitenventile geschlossen sind, das Hauptventil 52 aber nicht geschlossen ist, dies als eine Einstellung des Spritzbetriebs erkannt wird. Befindet sich das Hauptventil in einer Spritz-Stellung so wird vom Arbeitsmodussensor 66 ein Arbeitsbetrieb signalisiert. Anderenfalls, bei einer Nicht-Spritz-Stellung wird vom Arbeitsmodussensor 66 ein Rangier- bzw. Vorgewendebetrieb signalisiert.

Der Knickwinkelsensor 42 ermittelt, ob die gezogene Feldspritze 14 spurtreu hinter dem Schlepper 12 läuft oder nicht.

Der Fahrtrichtungssensor 72 ermittelt, ob das Gespann 10 in Rückwärtsfahrt oder Vorwärtsfahrt betrieben wird.

Die Steuereinheit 68 nimmt die von dem Arbeitsmodussensor 66 und dem Fahrtrichtungssensor 72 ausgesandten Signale an, ermittelt den einzustellenden Betriebszustand (Arbeitsbetrieb oder Rangier- bzw. Vorgewendebetrieb) und Steuermodus und gibt in dem bevorzugten Ausführungsbeispiel Signale an die Magnete 70, die zu einer Verstellung der Betätigungsvorrichtung 62 führen. Die Stellung der Betätigungsvorrichtung 62 bewirkt wiederum eine Arretierung oder Bewegung der Stellvorrichtung 46 und diese bewirkt eine Arretierung oder Bewegung der Deichsel 24.

Signalisiert der Arbeitsmodussensor 66 einen Arbeitsbetrieb, dann funktioniert die Steuereinheit 68 wie folgt:

Erkennt der Fahrtrichtungssensor 72, dass sich das Gespann 10 in Vorwärtsfahrt befindet, dann wird die Steuereinheit 68 im Haltemodus betrieben, die Betätigungsvorrichtung 62 in ihrer Neutralstellung gehalten und die Stellvorrichtung 46 damit arretiert. Es wird davon ausgegangen, dass die Stellvorrichtung 46 zuvor die Deichsel 24 in die mittige Grund- oder Normalstellung bewegt hatte, was durch einen weiteren nicht gezeigten Sensor an dem Lager 36 oder an der Stellvorrichtung 46 bzw. durch genaue Hydraulikventile sichergestellt werden kann.

Erkennt der Fahrtrichtungssensor 72, dass sich das Gespann 10 in Rückwärtsfahrt befindet, dann tritt keine Veränderung ein, die Steuereinheit 68 wird weiterhin im Haltemodus betrieben, die Betätigungsvorrichtung 62 in ihrer Neutralstellung gehalten und die Stellvorrichtung 46 damit arretiert.

Signalisiert der Arbeitsmodussensor 66 aufgrund einer Nicht-Spritz-Stellung des Hauptventils 52 einen Rangier- bzw. Vorgewendebetrieb, dann funktioniert die Steuereinheit 68 wie folgt:

Erkennt der Fahrtrichtungssensor 72, dass sich das Gespann 10 in Vorwärtsfahrt befindet, dann wird die Steuereinheit 68 im Regelmodus betrieben. Die Steuereinheit 68 ermittelt mittels des Knickwinkelsensors 42 die Neigung der Deichsel 24 zu der Längsachse des Schleppers 12 und errechnet daraus ein Signal für die Magnete 70, das bewirkt, dass die Stellvorrichtung 46 die Deichsel 24 derart gegenüber dem Fahrgestell 22 verschwenkt, dass die Räder 20 genau in der Spur der Hinterräder des Schleppers 12 abrollen. Wird nun ein Vorgewende befahren, kommt es nicht zu Schäden unter den Pflanzen.

Sobald der Fahrtrichtungssensor 72 Rückwärtsfahrt signalisiert, schaltet die Steuereinheit 68 in den Haltemodus um, und die Betätigungsvorrichtung 62 wird wieder in ihre Neutralstellung gebracht, was zu einer Arretierung der Stellvorrichtung 46 führt. Es wird davon ausgegangen, dass die Stellvorrichtung 46 zuvor, beispielsweise durch ausreichende Vorwärtsfahrt, in ihre mittige Grund- oder Normalstellung bewegt wurde. Der Betreiber kann somit mit deaktiviertem Spurfolgesystem 30 bzw. mit arretierter Stellvorrichtung 46 Rangier- bzw. Vorgewendearbeiten in Rückwärtsfahrt durchführen.

Wenn der Fahrtrichtungssensor 72 wieder Vorwärtsfahrt signalisiert, dann wird die Steuereinheit 68 wieder im Regelmodus betrieben und das Gespann 10 mit aktiviertem Spurfolgesystem 30 gefahren.

Wenn der Arbeitsmodussensor 66 wieder Arbeitsbetrieb bzw. Spritzbetrieb signalisiert, wird in Vorwärtsfahrt der Haltemodus betrieben und das Spurfolgesystem 30 deaktiviert bzw. die Stellvorrichtung 46 arretiert.

In nicht dargestellten Ausführungsbeispielen kann die Steuereinheit 68 Signale an nicht gezeigte Magnetventile zur Verstellung der Höhe oder der Neigung des Spritzgestänges 26 senden. Beispielsweise wird zum Befahren des Vorgewendes das Spritzgestänge 26 angehoben, um nicht in Kollision mit Pflanzen zu geraten. Auch in diesem Fall wird aus der Stellung des Hauptventils 52 und gegebenenfalls dem Signal des Knickwinkelsensors 42 abgeleitet, dass der Spritzbetrieb für den Wechsel der Fahrgasse unterbrochen wird.

Das in dem Ausführungsbeispiel dargestellte Verfahren kann des Weiteren mit einem Headland-Management-System (HMS) kombiniert werden, welches über einen Aktivierungsschalter 82 aktiviert wird. In diesem Fall würde der Aktivierungsschalter 76 lediglich zur Aktivierung des Verfahrens im Arbeitsbetrieb dienen, damit eine Arretierung der Stellvorrichtung 46 im Spritzbetrieb erfolgt. Die Aktivierung des Verfahrens im Rangier- bzw. Vorgewendebetrieb erfolgt dann über den HMS-Aktivierungsschalter 82.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So können beispielsweise auch andere Anhängegerätesysteme vorhanden sein, bei denen ähnlich wie bei einem Spurfolgesystem eine Ansteuerung in Abhängigkeit von der Fahrtrichtung zweckmäßig erscheint. Des Weiteren ist dieses Verfahren nicht ausschließlich für Anhängefeldspritzen bestimmt. Auch andere Anhängegeräte, wie beispielsweise Sämaschinen, Eggen oder Pflüge etc., können mit einem Spurfolgesystem ausgerüstet sein, so dass es zweckmäßig ist, das beschriebene Verfahren auch dort anzuwenden. Ferner können die genannten sowie auch andere Anhängegeräte mit verschiedenen anderen Anhängegerätesystemen bestückt sein, bei denen es ebenfalls zweckmäßig ist, diese in Abhängigkeit der Fahrtrichtung anzusteuern. Die Kombination Anhängefeldspritze mit einem Spurfolgesystem als Anhängegerätesystem wurde hierbei als ein mögliches Ausführungsbeispiel gewählt, wobei das erfindungsgemäße Verfahren durchaus auch bei anderen Kombinationen angewendet werden kann.

## Patentansprüche

1. Verfahren zur Ansteuerung eines Spurfolgesystems (30) eines von einem landwirtschaftlichen Fahrzeug (12) gezogenen Anhängegerätes (14), wobei das Anhängegerät (14) eine Deichsel (24) mit zwei hintereinander angeordneten Knicklagern (36, 40) umfasst, mit einer Steuereinheit (68), einer von der Steuereinheit (68) angesteuerten Betätigungsvorrichtung (62), einer von der Betätigungsvorrichtung (62) betätigten Stellvorrichtung (46) die die Deichsel (24) verschwenkt, und einem Fahrtrichtungssensor (72), welcher in Abhängigkeit eines eine Fahrtrichtung angebenden Elementes ein Fahrtrichtungssignal liefert, **dadurch gekennzeichnet, dass** die Steuereinheit (68) die Betätigungsvorrichtung (62) in Abhängigkeit des Fahrtrichtungssignals derart ansteuert, dass bei Rückwärtsfahrt eine Arretierung der Stellvorrichtung (46) erfolgt.

2. Verfahren nach Anspruch 1 oder 2, **dadurch gekennzeichnet, dass** die Steuereinheit (68) in einem Haltemodus und in einem Regelmodus betrieben wird, wobei im Haltemodus die Stellvorrichtung (46) in eine vorgebbare Grundstellung gebracht und fixiert wird und im Regelmodus die Stellung der Stellvorrichtung (46) gesteuert bzw. geregelt wird.

3. Verfahren nach Anspruch 2, **dadurch gekennzeichnet, dass** die Steuereinheit (68) bei Auftreten eines Rückwärtsfahrtsignals im Haltemodus betrieben wird.

4. Verfahren nach Anspruch 2 oder 3, **dadurch gekennzeichnet, dass** die Steuereinheit (68) bei Auftreten eines Vorwärtsfahrtsignals während des Rangier- oder Vorgewendebetriebs, im Regelmodus betrieben wird.

5. Verfahren nach einem der Ansprüche 2 bis 4, **dadurch gekennzeichnet, dass** die Steuereinheit (68) unabhängig vom Fahrtrichtungssignal im Haltemodus betrieben wird.

6. Verfahren nach einem der vorhergehenden Ansprüche, **dadurch gekennzeichnet, dass** das Verfahren durch ein Auslösemittel (76) oder durch ein elektronisches Vorgewende-Management-System (82) aktiviert wird.

7. Vorrichtung zur Ansteuerung eines Spurfolgesystems (30) eines von einem landwirtschaftlichen Fahrzeug (12) gezogenen Anhängegerätes (14), wobei das Anhängegerät (14) eine Deichsel (24) mit zwei hintereinander angeordneten Knicklagern (36, 40) umfasst, mit einer Steuereinheit (68), einer von der Steuereinheit (68) ansteuerbaren Betätigungsvorrichtung (62), einer von der Betätigungsvorrichtung (62) betätigbaren Stellvorrichtung (46), einem Arbeitsmodussensor (66) und einem Fahrtrichtungssensor (72), durch welchen in Abhängigkeit eines eine Fahrtrichtung angebenden Elementes ein Fahrtrichtungssignal lieferbar ist, **gekennzeichnet durch** ein CAN-Bus-System (78, 80), **durch** welches die Steuereinheit (68) entsprechend einem Verfahren nach einem der Ansprüche 1 bis 6 ansteuerbar ist.

8. Vorrichtung nach Anspruch 7, **dadurch gekennzeichnet, dass** ein Auslösemittel (76) zur Aktivierung/Deaktivierung des Verfahrens oder ein durch ein Auslösemittel (82) zuschaltbares elektronisches Vorgewende-Management-System enthalten ist.

9. Vorrichtung nach einem der Ansprüche 7 oder 8, **dadurch gekennzeichnet, dass** die Stellvorrichtung (46) oder die Betätigungsvorrichtung (62) elektronisch bzw. elektromagnetisch, hydraulisch oder pneumatisch betreibbar ist.

## Claims

1. A method of controlling a track following system (30) of a trailer implement (14) towed by an agricultural vehicle (12), wherein the trailer implement (14) comprises a drawbar (24) with two bucking joints (36, 40) arranged one after the other, with a control unit (68), an actuating device (62) controlled by the control unit (68), a positioning device (46) which is actuated by the actuating device (62) and which turns the tow-bar (24), and a direction of travel sensor (72) which provides a direction of travel signal in dependence on an element indicating a direction of travel, **characterized in that** the control unit (68) so controls the actuating device (62) in dependence on the direction of travel signal that the positioning device (46) is arrested during reverse travel.

2. A method according to claim 1, **characterized in that** the control unit (68) is operated in a hold mode and in a regulating mode, wherein the positioning device (46) is brought into and fixed in a predetermined base position in the hold mode and the position of the positioning device (46) is controlled or regulated in the regulating mode.

3. A method according to claim 2, **characterized in that** the control unit (68) is operated in the hold mode on occurrence of a reverse travel signal.

4. A method according to claim 2 or 3, **characterized in that** the control unit (68) is operated in the regulating mode on occurrence of a forward travel signal during operation when manoeuvring or in a headland turn.

5. A method according to any of claims 2 to 4, **characterized in that** the control unit (68) is operated in the hold mode independently of the direction of travel signal.

6. A method according to any of the preceding claims, **characterized in that** the method is initiated by a trigger means (76) or by an electronic headland turn management system (82).

7. Apparatus for controlling a track following system (30) of a trailer implement (14) towed by an agricultural vehicle (12), wherein the trailer implement (14) comprises a drawbar (24) with two buckling joints (36, 40) following one another, with a control unit (68), a positioning device (46) controllable by the control unit (68), a positioning device (46) which can be actuated by the actuating device (62), a working mode sensor (66) and a direction of travel sensor (72), through which a direction of travel signal can be supplied in dependence on an element indicating a direction of travel, **characterized by** a CAN bus system (78, 80) through which the control unit (68) can be controlled in accordance with a method according to any of claims 1 to 6.

8. Apparatus according to claim 7" **characterized in that** a trigger means (76) for activating/deactivating the method or an electronic headland turn management system which can be switched on by a trigger means (82) is included.

9. Apparatus according to claim 7 or 8, **characterized in that** the positioning device (46) or the actuating device (62) is operable electronically and electromagnetically, hydraulically or pneumatically.

## Revendications

1. Procédé de commande d'un système de contrôle d'alignement (30) d'une remorque (14) tractée par un véhicule agricole (12), ladite remorque (14) étant munie d'une barre d'attelage (24) avec deux paliers de flambage (36, 40) agencés l'un derrière l'autre, comportant une unité de commande (68), un dispositif de manoeuvre (62) activé par l'unité de commande (68), un dispositif de réglage (46), qui peut être actionné par le dispositif de manoeuvre (62) et qui fait pivoter la barre d'attelage (24), et un capteur de sens de déplacement (72) qui délivre un signal de sens de déplacement en fonction d'un élément indiquant le sens de déplacement, **caractérisé en ce que** l'unité de commande (68) active le dispositif de manoeuvre (62) en fonction du signal de sens de déplacement, de telle sorte qu'une marche arrière entraîne une immobilisation de dispositif de réglage (46).

2. Procédé selon la revendication 1, **caractérisé en ce que** l'unité de commande (68) est actionnée en mode d'arrêt et en mode de réglage, sachant que, dans le mode d'arrêt, le dispositif de réglage (46) est amené et fixé dans une position de base pouvant être prédéfinie et, dans le mode de réglage, la position du dispositif de réglage (46) est commandée et réglée.

3. Procédé selon la revendication 2, **caractérisé en ce que** l'unité de commande (68) est actionnée en mode d'arrêt lorsqu'un signal de marche arrière est délivré.

4. Procédé selon la revendication 2 ou 3, **caractérisé en ce que** l'unité de commande (68) est actionnée en mode de réglage lorsqu'un signal de marche avant est délivré pendant les manoeuvres ou les virages en bout de champ.

5. Procédé selon l'une quelconque des revendications 2 à 4, **caractérisé en ce que** l'unité de commande (68) est actionnée en mode d'arrêt indépendamment du signal du sens de déplacement.

6. Procédé selon l'une quelconque des revendications précédentes, **caractérisé en ce que** le procédé est activé par un moyen de déclenchement (76) ou par un système de gestion des virages en bout de champ (82) électronique.

7. Dispositif de commande d'un système de contrôle d'alignement (30) d'une remorque (14) tractée par un véhicule agricole (12), ladite remorque (14) étant munie d'une barre d'attelage (24) avec deux paliers de flambage (36, 40) agencés l'un derrière l'autre, comportant une unité de commande (68), un dispositif de manoeuvre (62) activé par l'unité de commande (68), un dispositif de réglage (46), qui peut être actionné par le dispositif de manoeuvre (62), un capteur de mode de travail (66) et un capteur de sens de déplacement (72) qui est apte à délivrer un signal de sens de déplacement en fonction d'un élément indiquant le sens de déplacement, **caractérisé par** un système de bus CAN (78, 80), par lequel l'unité de commande (68) peut être activée conformément à un procédé selon l'une des revendications 1 à 6.

8. Dispositif selon la revendication 7, **caractérisé en ce qu'**il comporte un moyen de déclenchement (76) destiné à activer et désactiver le procédé ou un système de gestion des virages en bout de champ (82) électronique pouvant être actionné par un moyen de déclenchement (82).

9. Dispositif selon la revendication 7 ou 8, **caractérisé en ce que** le dispositif de réglage (46) ou le dispositif de manoeuvre (62) peuvent être actionnés par voie électronique, plus précisément électromagnétique, hydraulique ou pneumatique.
